# EUROPEAN PATENT APPLICATION

(11) **EP 0 652 244 A2**
(43) Date of publication of application: **10.05.1995**
(21) Application number: 94308283.4
(22) Date of filing: 10.11.1994
(51) Int. Cl.: C08G 77/06, C08G 77/08

(54) **Straight-chain organopolysiloxane and process of producing the same**

(30) Priority: 10.11.1993 JP 304858/93
(71) Applicant: Shin-Etsu Chemical Co., Ltd., Chiyoda-ku Tokyo 100 (JP)
(72) Inventor: Yamaguchi, Kouichi, Shin-Etsu Chemical Co. Ltd., Usui-gun, Gunma-ken (JP); Fukuda, Kenichi, Shin-Etsu Chemical Co. Ltd., Usui-gun, Gunma-ken (JP); Kishita, Hirofumi, Shin-Etsu Chemical Co. Ltd., Usui-gun, Gunma-ken (JP); Kobayashi, Nobuyuki, Shin-Etsu Chemical Co. Ltd., Usui-gun, Gunma-ken (JP); Munezawa, Kazutoshi, Shin-Etsu Chemical Co. Ltd., Usui-gun, Gunma-ken (JP)
(74) Representative: Votier, Sidney David

(57) **Abstract**

A straight-chain organopolysiloxane represented by the following general formula : 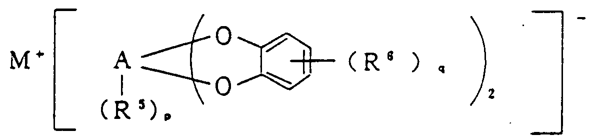 wherein R and R¹ each represent a monovalent hydrocarbon group, X represents a hydrogen atom or a triorganosilyl group, and n is an integer of 15 to 4,000 and containing cyclic polysiloxanes having molecular weights of 3,000 or less in an amount of 50 ppm or less. This straight-chain organopolysiloxane is novel in that the straight-chain organopolysiloxane contains the cyclic polysiloxanes having molecular weights of 3,000 or less only in an amount of 50 ppm or less. Where the straight-chain organopolysiloxane is used as an electric/electronic material, a building material, and the like, a contact failure due to volatilization of low molecular weight components, soiling to surroundings due to bleeding, and the like can be avoided.

## Description

### BACKGROUND OF THE INVENTION

### 1. Field of the Invention

The present invention relates to a straight-chain organopolysiloxane that is useful as a silicone oil whose various applications are known and as a raw material of a rubberlike cured product and a process of producing the same.

### 2. Description of the Prior Art

Since straight-chain organopolysiloxanes have low surface tensions and low refraction indexes and are excellent in electrical insulating properties, releasability, water repellency, anti-foaming properties, oil resistance, solvent resistance, lubricity, heat resistance, and the like, they are used in various applications in a wide variety of fields of industry.

However, where a hexamethylcyclotrisiloxane or the like is subjected to ring opening polymerization by the conventionally known method, in addition to the intended straight-chain organopolysiloxane, cyclic siloxanes and low-molecular-weight straight-chain siloxanes are concomitantly produced and, in particular, the repeat unit of the produced cyclic siloxanes ranges from three to tens. Out of these, low-molecular-weight straight-chain siloxanes and cyclic siloxanes having low degrees of polymerization can be removed by heating the polymer under reduced pressure, but cyclic siloxanes having molecular weights of 740 or more, and particularly 1,480 or more, (such molecular weights normally correspond to cyclic siloxane oligomers composed of 10 more siloxane units, particularly 20 to more siloxane units, in the case of cyclic dimethylsiloxanes), are very difficult to be removed. Therefore, if the thus obtained straight-chain organopolysiloxane is used as an oil or as a raw material, for example, of a rubberlike cured product and a coating film by a known technique, the remaining cyclic siloxanes volatilize gradually from the oil, the rubberlike cured product, or the like or bleed on the surface of the rubberlike cured product, causing an electrical contact trouble in the electric field and surrounding soiling in the field of building materials. Generally, such a trouble or problem is caused by cyclic siloxanes having molecular weights of 3,000 or less (such molecular weights normally correspond to cyclic siloxane oligomers composed of 3 to 40 siloxane units, in the case of cyclic dimethylsiloxanes).

Therefore, it is desired to develop a straight-chain organopolysiloxane substantially free from cyclic siloxanes having molecular weights of 3,000 or less as well as low-molecular-weight straight-chain siloxanes and cyclic siloxanes having low degrees of polymerization. As attempts of producing such a straight-chain organopolysiloxane, for example, the following are known :
(A) a method wherein hexamethylcyclotrisiloxane or the like is subjected to ring opening polymerization by using as a catalyst a compound represented by the following formula : 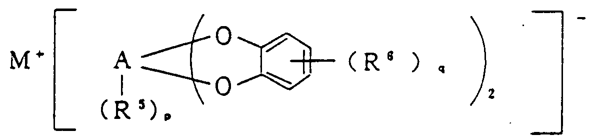 wherein R⁵ and R⁶ each represent a monovalent organic group, M represents a quaternary ammonium ion, a quaternary phosphonium ion, or an alkali metal ion, A represents a silicon atom or a boron atom, p is 1 where A is a silicon atom or p is 0 where A is a boron atom, and q is an integer of 0 to 2 (Japanese Patent Publication (KOKOKU) No. 45-1070 and U.S. Patent No. 3,445,426) and
(B) a method wherein, for example, a trisiloxane consisting of the identical siloxane units, such as hexamethylenetrisloxane and hexaphenyltrisiloxane, is polymerized by using, as a catalyst, a lithium silanolate, an organolithium compound, or the like to produce a monodisperse straight-chain organopolysiloxane (Japanese Patent Publication (KOKOKU) No. 46-27267, Japanese Pre-examination Patent Publication (KOKAI) No. 1-294738, and ACS Polymer Preprint, 10 (2), 877 (1969)).

However, since, even by these methods, it is impossible to restrain cyclic siloxanes from being produced concomitantly in large amounts, it cannot be avoided that the straight-chain organopolysiloxane obtained in the method (A) contains cyclic siloxanes having a molecular weight of 740 or more in an amount of 400 ppm or more and the straight-chain organopolysiloxane obtained in the method (B) contains cyclic siloxanes having a molecular weight of 740 or more in an amount of 2,000 ppm or more.

As a method of separating and removing cyclic siloxanes and straight-chain siloxanes having low molecular weights, an attempt is made wherein a straight-chain organopolysiloxane containing cyclic siloxanes and straight-chain siloxanes having low molecular weights is stripped by thin film distillation, solvent extraction, or the like under reduced pressure and heating to produce a straight-chain organopolysiloxane free from these volatile siloxanes (Japanese Pre-examination Patent Publication (KOKAI) No. 1-69306). However, even by this method, cyclic siloxanes having molecular weights of 740 or more cannot be removed satisfactorily.

### SUMMARY OF THE INVENTION

Therefore, an object of the present invention is to provide a straight-chain organopolysiloxane substantially free from cyclic siloxanes having molecular weights of 3,000 or less.

That is, the present invention provides a straight-chain organopolysiloxane represented by the following general formula (1) : 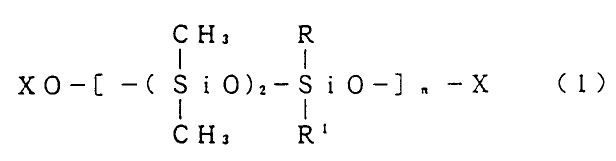
wherein R represents an unsubstituted or substituted monovalent hydrocarbon group having 3 or more carbon atoms, R¹ represents a methyl group or an unsubstituted or substituted monovalent hydrocarbon group having 3 or more carbon atoms, X, which are the same or different, each represent a hydrogen atom or a triorganosilyl group represented by the following general formula (2) :

-Si(R²)₃ (2)

wherein R² represents a monovalent hydrocarbon group having 1 to 8 carbon atoms, and n is an integer of 15 to 4,000, and containing cyclic polysiloxanes having molecular weights of 3,000 or less (such molecular weights normally correspond to cyclic siloxane oligomers composed of 3 to 40 siloxane units, in the case of cyclic dimethylsiloxanes) in an amount of 50 ppm or less.

The present inventors have found that by subjecting a specified cyclosiloxane to ring opening polymerization in the presence of a specified catalyst, the concomitant production of cyclic siloxanes having 10 or more repeated units, i.e., having molecular weights of 740 or more can be suppressed and by stripping the thus obtained polymer the intended above straight-chain organopolysiloxane is obtained.

That is, the present invention provides as methods of producing the above straight-chain organopolysiloxane the following production method (I) and production method (II).

### Production method (I) :

A process of producing, out of the straight-chain organopolysiloxanes represented by the above general formula (1), a straight-chain organopolysiloxane wherein X at both ends is terminated by a triorganosilyl group of the above general formula (2), i.e., a straight-chain organopolysiloxane represented by the general formula (1a) : 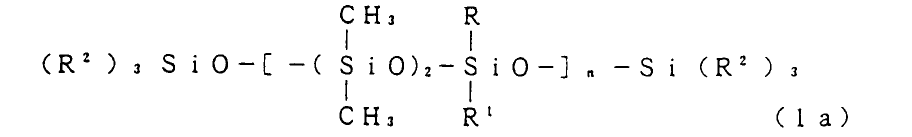
wherein R, R¹, R², and n have the same meanings as defined above, and containing cyclic polysiloxanes having molecular weights of 3,000 or less (such molecular weights normally correspond to cyclic siloxane oligomers composed of 3 to 40 siloxane units, in the case of cyclic dimethylsiloxanes) in an amount of 50 ppm or less, which comprises the following steps of :
(A) subjecting a cyclotrisiloxane represented by the general formula (3) : 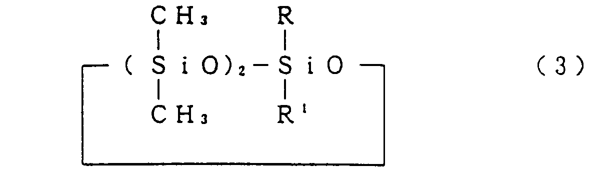 wherein R and R¹ have the same meaning as defined above, to ring opening polymerization in the presence of a lithium silanolate or a compound represented by the general formula (4) : 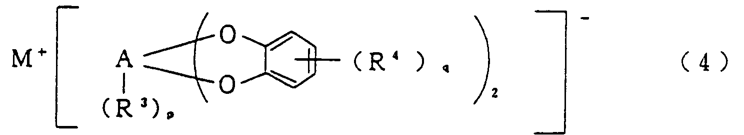 wherein R³ and R⁴ each represent a monovalent organic group, M represents a quaternary ammonium ion (including a pyridinium ion), a quaternary phosphonium ion, or an alkali metal ion, A represents a silicon atom or a boron atom, p is 1 where A is a silicon atom or p is 0 where A is a boron atom, and q is an integer of 0 to 2,
(B) neutralizing the reaction mixture obtained in the step (A) with a halosilane represented by the general formula (5) :

   Y-Si(R²)₃ (5)

   wherein Y represents a halogen atom and R² has the same meaning as defined above and a disilazane represented by the general formula (6) :

   NH[Si(R²)₃]₂ (6)

   wherein R² has the same meaning as defined above, and
(C) stripping the polymer obtained in the step (B).

### Production method (II) :

A process of producing, out of the straight-chain organopolysiloxanes represented by the above general formula (1), a straight-chain organopolysiloxane wherein X at both ends is terminated by a hydrogen atom, i.e., a straight-chain organopolysiloxane represented by the general formula (1b) : 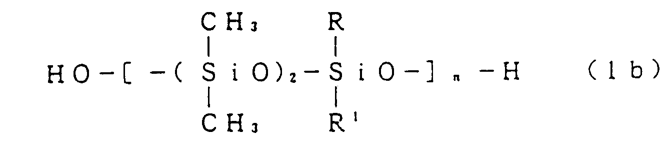
wherein R, R¹, and n have the same meanings as defined above, and containing cyclic polysiloxanes having molecular weights of 3,000 or less (such molecular weights normally correspond to cyclic siloxane oligomers composed of 3 to 40 siloxane units, in the case of cyclic dimethylsiloxanes) in an amount of 50 ppm or less, which comprises the following steps of :
(A') subjecting a cyclotrisiloxane represented by the general formula (3) : 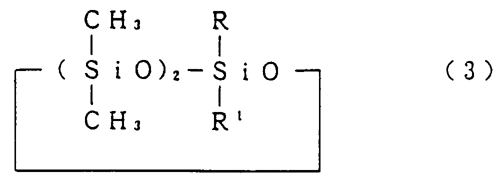 wherein R and R¹ have the same meaning as defined above to ring opening polymerization in the presence of as a catalyst a lithium silanolate or a compound represented by the general formula (4) : 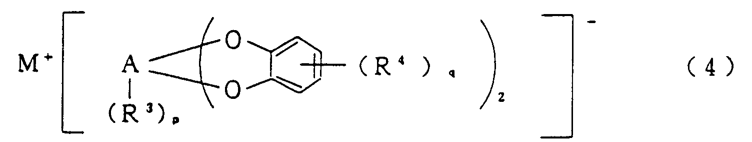 wherein R³ and R⁴ each represent a monovalent organic group, M represents a quaternary ammonium ion (including a pyridinium ion), a quaternary phosphonium ion, or an alkali metal ion, A represents a silicon atom or a boron atom, p is 1 where A is a silicon atom or p is 0 where A is a boron atom, and q is an integer of 0 to 2, and water,
(B') inactivating the catalyst in the reaction mixture obtained in the step (A'), and
(C') stripping the polymer obtained in the step (B').

According to the present invention, a straight-chain organopolysiloxane is obtained which is new in that it is substantially free from cyclic siloxanes. Since said organopolysiloxane does not contain components that likely volatilize or breed as described above, it is useful particularly in the electronic, electric, and building fields.

### BRIEF DESCRIPTION OF THE DRAWINGS

Fig. 1 is a chart obtained by subjecting the straight-chain organopolysiloxane roughly refined product obtained in Example 1 that had not yet been stripped to gas chromatography.

Fig. 2 is a chart obtained by subjecting the straight-chain organopolysiloxane obtained in Example 1 that had been stripped to gas chromatography.

Fig. 3 is a chart of the infrared absorption spectrum of the straight-chain organopolysiloxane obtained in Example 1.

Fig. 4 is a chart of the infrared absorption spectrum of the straight-chain organopolysiloxane obtained in Example 2.

Fig. 5 is a chart of the infrared absorption spectrum of the straight-chain organopolysiloxane obtained in Example 3.

Fig. 6 is a chart of the infrared absorption spectrum of the straight-chain organopolysiloxane obtained in Example 4.

Fig. 7 is a chart obtained by subjecting the straight-chain organopolysiloxane roughly refined product obtained in Comparative Example 1 that had not yet been stripped to gas chromatography.

Fig. 8 is a chart obtained by subjecting the straight-chain organopolysiloxane obtained in Comparative Example 1 that had been stripped to gas chromatography.

In the figures, m represents the degree of polymerization of the cyclic siloxane and Mw represents the molecular weight (weight-average) of the cyclic siloxane.

### DETAILED DESCRIPTION OF PREFERRED EMBODIMENTS

Now, the present invention is described in detail.

### Straight-chain organosiloxanes

The straight-chain organopolysiloxane of the present invention is an organopolysiloxane whose both ends are terminated by a hydroxy group or a triorganosilyl group and which has, as pendant substituents, methyl groups and substituted or unsubstituted monovalent hydrocarbon groups having 3 or more carbon atoms as represented by the general formula (1) with the content of cyclic polysiloxanes having molecular weights of 3,000 or less (such molecular weights correspond to cyclic oligomers composed of 40 or less siloxane units in the case of cyclic dimethylsiloxanes) being 50 ppm or less, normally 0.1 to 50 ppm, particularly 0.5 to 10 ppm.

In the general formula (1), R is an unsubstituted or substituted monovalent hydrocarbon group having 3 or more carbon atoms, normally 3 to 20 and preferably 3 to 12. Said unsubstituted or substituted monovalent hydrocarbon group having 3 or more carbon atoms includes, for example, a straight-chain alkyl group, such as a propyl group, a butyl group, a pentyl group, a hexyl group, a heptyl group, an octyl group, a nonyl group, a decyl group, an undecyl group, a dodecyl group, a tetradecyl group, a hexadecyl group and an octadecyl group; a branched alkyl group, such as an isopropyl group, an isobutyl group, a tert-butyl group, a neopentyl group, an isooctyl group, and a 2-ethylhexyl group; a cyclic alkyl group, such as a cyclopentyl group, a cyclohexyl group and a cycloheptyl group; an aryl group, such as a phenyl group, a tolyl group, a xylyl group, a naphthyl group and a biphenyl group; an alkenyl group, such as an allyl group, a propenyl group, an isopropenyl group, a butenyl group, an isobutenyl group, a crotyl group, a hexenyl group and a cyclohexenyl group; an aralkyl group, such as a benzyl group, a phenylethyl group, a phenylpropyl group and a methylbenzyl group; and corresponding substituted hydrocarbon groups that are formed by replacing part or all of the hydrogen atoms of the above hydrocarbon groups by a halogen atom(s), such as fluorine, chlorine and bromine, e.g., a chloropropyl group and a trifuluoropropyl group.

In the general formula (1), R¹ represents a methyl group or an unsubstituted or substituted monovalent hydrocarbon group having 3 or more carbon atoms, normally 3 to 20 and preferably 3 to 12. The monovalent hydrocarbon group having 3 or more carbon atoms includes those mentioned as examples of R.

Specific examples of the straight-chain organopolysiloxane of the present invention include straight-chain organopolysiloxanes represented by the following formulas : 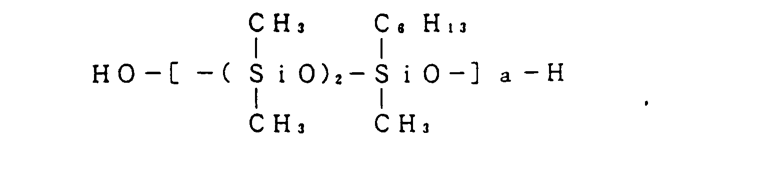 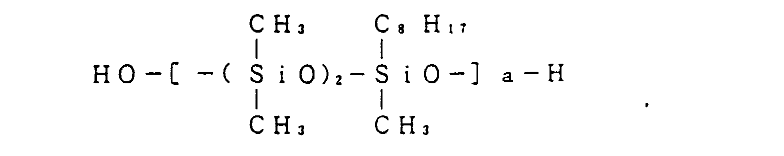 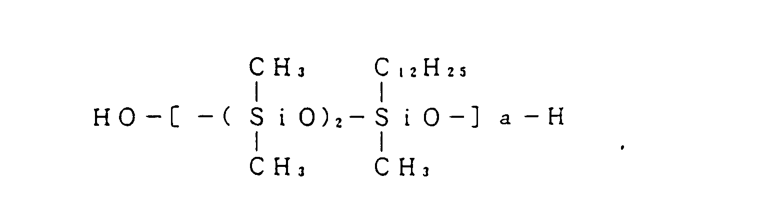 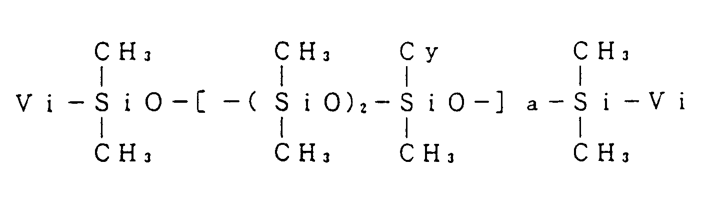
and 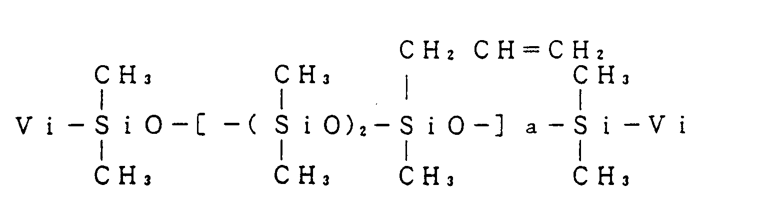
wherein in the formulas a stands for an integer of 15 to 4,000, preferably 20 to 1,000, and more preferably 30 to 200. Herein, Vi stands for the vinyl group and Cy stands for the cyclohexyl group.

### Production method (I)

Out of the straight-chain organopolysiloxanes of the present invention, the straight-chain organopolysiloxanes the both ends of which are terminated by a triorganosilyl group of the general formula (2) can be obtained, for example, by (A) subjecting a cyclotrisiloxane represented by the general formula (3) to ring opening polymerization using as a catalyst a lithium silanolate or a compound represented by the general formula (4), (B) neutralizing the obtained reaction mixture with a halosilane represented by the general formula (5) and a disilazane represented by the general formula (6), and (C) stripping the obtained polymer.

### Step (A) :

The cyclotrisiloxane represented by the general formula (3) used as a monomer includes, for example, 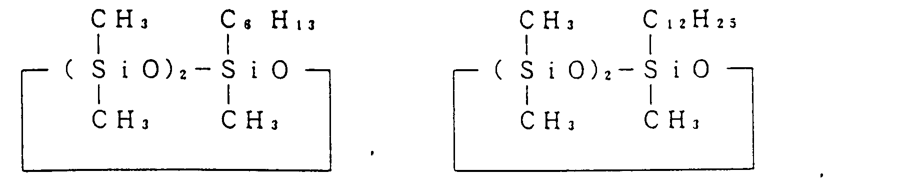 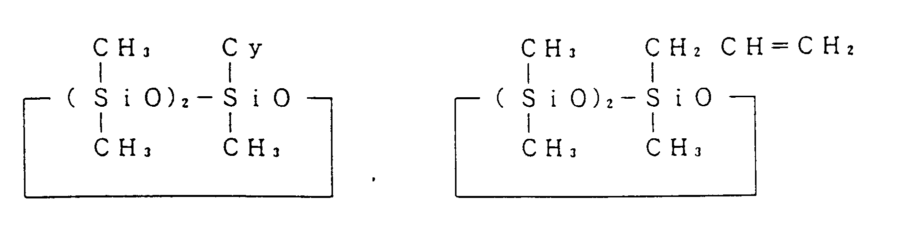
and 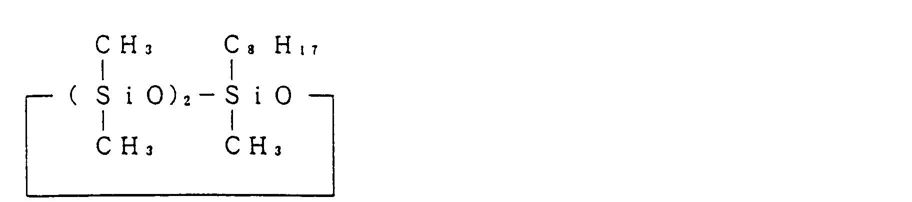
wherein Cy represents a cyclohexyl group.

The lithium silanolate used as a catalyst includes, but is not limited particularly to, for example, 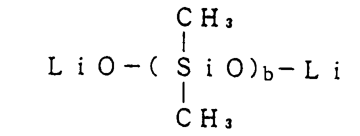
and 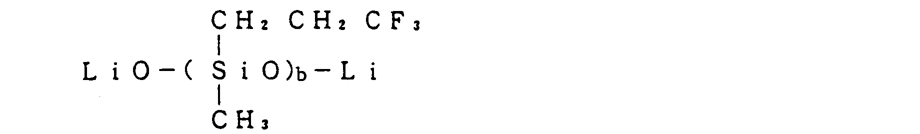
wherein in the formulas b stands for an integer of 1 to 20, preferably 2 to 10, and specifically 1, 2, 3, 4, 5, 6, 7 or 8.
These lithium silanolates may be used singly or as a combination of two or more. The amount of the lithium silanolate to be used is not particularly limited. The lithium silanolate is generally used in such an amount that the molar ratio of the total of the silicon atoms in the cyclotrisiloxane of the general formula (3) to the total of the molecules of the lithium silanolate is in the range of from 100 : 1 to 10,000 : 1. Generally the lithium silanolate is used in solution by dissolving it in a polar solvent, such as tetrahydrofuran and methyl ethyl ketone. To enhance the activity of the lithium silanolate, a small amount of a glyme, such as tetraglyme, may be added to the lithium silanolate.

The compound represented by the general formula (4) that can be used as a catalyst consists of a monovalent catechol complex anion having as the center atom a silicon atom or a boron atom and a monovalent cation M. Where the center atom of the catechol complex anion is a silicon atom, the catechol complex anion has a monovalent organic group R³ bonded to the silicon atom. The hydrogen atom on the benzene ring in the catechol complex anion may be replaced by a monovalent organic group R⁴.

The above monovalent organic groups R³ and R⁴ include, for example, unsubstituted or substituted monovalent hydrocarbon groups having normally 1 to 20 carbon atoms and preferably 1 to 12 carbon atoms, e.g., a straight-chain alkyl group having 1 to 20 carbon atoms, such as a methyl group, an ethyl group, a propyl group, a butyl group, a pentyl group, a hexyl group, a heptyl group, an octyl group, a nonyl group, a decyl group, an undecyl group, a dodecyl group, a tetradecyl group, a hexadecyl group, and an octadecyl group; a branched alkyl group having 3 to 10 carbon atoms, such as an isopropyl group, an isobutyl group, a ter-butyl group, a neopentyl group, an isooctyl group, and a 2-ethylhexyl group; a cyclic alkyl group having 5 to 10 carbon atoms, such as a cyclopentyl group, a cyclohexyl group and a cycloheptyl group; an aryl group having 6 to 12 carbon atoms, such as a phenyl group, a tolyl group, a xylyl group, a naphthyl group and a xenyl group; an aralkyl group having 7 to 10 carbon atoms, such as a benzyl group, a 2-phenylethyl group, a 3-phenylpropyl group, and a 4-methylbenzyl group; an alkenyl group having 2 to 8 carbon atoms, such as a vinyl group, an allyl group, a propenyl group, an isopropenyl group, a butenyl gorup, an isobutenyl group, a crotyl group, a hexenyl group and a cychohexenyl group; an alkynyl group having 2 to 6 carbon atoms, such as an ethynyl group; and corresponding substituted hydrocarbon groups that are formed by replacing part or all of the hydrogen atoms of the above hydrocarbon groups by a halogen atom(s), such as bromine, chlorine and fluorine, e.g., a chloromethyl group, a bromoethyl group, a 3,3,3-trifluoropropyl group and a 2-chloroethyl group.

The above cation M is a quaternary ammonium ion (including a pyridinium ion), a quaternary phosphonium ion, or an alkali metal ion. The quaternary ammonium ion or the quaternary phosphonium ion includes, for example, quaternary ammonium ions or quaternary phosphonium ions having the organic monovalent group mentioned above as examples of R³ attached to a nitrogen atom or a phosphorus atom. The alkali metal ion includes a sodium ion, a potassium ion, and a rubidium ion.

Specific examples of the compound represented by the general formula (4) are shown below : 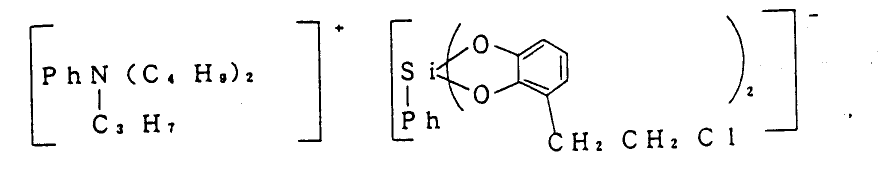 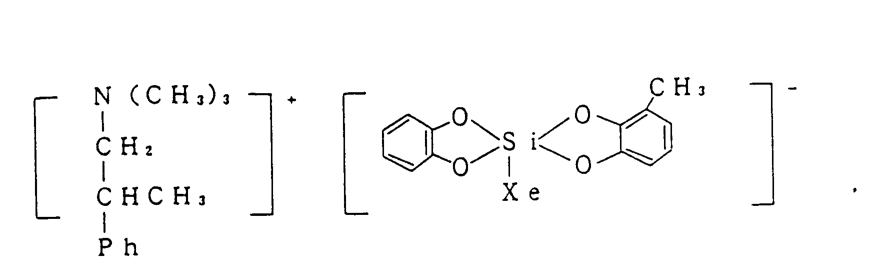 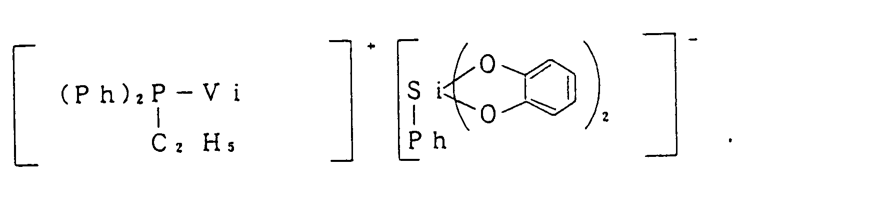 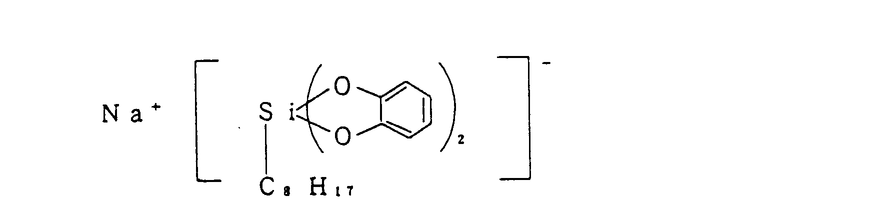 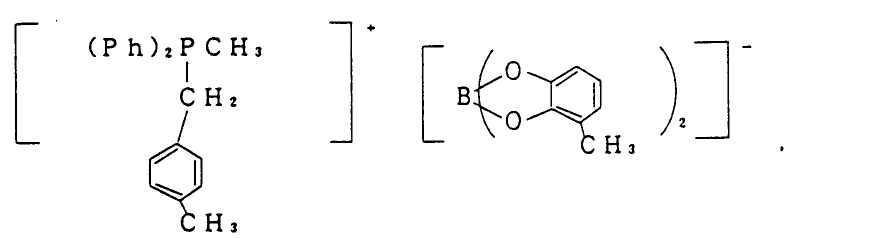 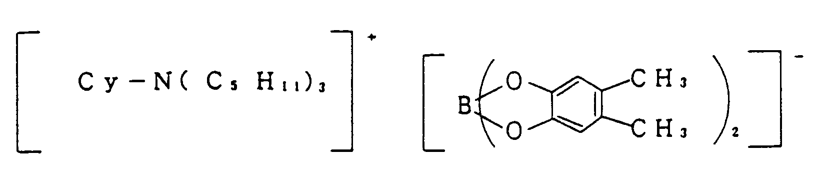
and 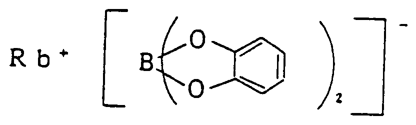
wherein Ph represents a phenyl group, Xe represents a xenyl group, Vi represents a vinyl group, and Cy represents a cyclohexyl group.

The amount of the compound represented by the general formula (4) to be used is not particularly restricted and is generally 0.05 % by weight or less, and more preferably 0.001 to 0.05 % by weight, based on the above cyclotrisiloxane.

Generally the compound represented by the general formula (4) is used together with a polar solvent capable of dissolving said compound. The polar solvent includes, for example, acetonitrile, dimethyl sulfone, tetramethyl sulfone, diethyl sulfone, and methylpropyl sulfone.

The compounds represented by the general formula (4) may be used singly or as a combination of two or more.

The temperature of the above ring opening polymerization is preferably 40 to 150°C, and more preferably 60 to 110°C if a lithium silanolate is used as a catalyst. In this case, if the temperature of the polymerization reaction is too high, there is a fear that low-molecular cyclic siloxanes are produced concomitantly. Further, if a compound represented by the general formula (4) is used as a catalyst, the reaction temperature is preferably 25 to 200°C, and more preferably 50 to 150°C. However, since it is required that the reaction temperature is lower than the decomposition temperature of the catalyst, the reaction temperature is determined suitably depending on the catalyst to be used.

The time required for the above ring opening polymerization reaction is in the range of several minutes to tens hours if a lithium silanolate is used as a catalyst. Generally, it is recommended that the polymerization is terminated in 30 min to several hours by adjusting the amount of the catalyst to be used and the polymerization temperature to obtain a straight-chain organopolysiloxane having a desired degree of polymerization. Where a compound represented by the general formula (4) is used as a catalyst, the reaction time is in the range of several minutes to several hours. Generally, it is recommended that the polymerization is terminated in 30 min to several hours by adjusting the amount of the catalyst and the polymerization temperature to obtain a straight-chain organopolysiloxane having a desired degree of polymerization.

### Step (B) :

The reaction mixture obtained by the polymerization in the step (A) is neutralized with a combination of a halosilane of the general formula (5) with a disilazane of the general formula (6), thereby stabilizing the reaction mixture. R² in the general formulas (5) and (6) independently stand for an unsubstituted or substituted monovalent hydrocarbon group having 1 to 8, preferebly 1 to 6, carbon atoms, and include those having up to 8 carbon atoms exemplified in respect of R³ and R⁴. The halosilane represented by the general formula (5) includes, for example, triorganochlorosilanes such as trimethylchlorosilane, vinyldimethylchlorosilane and divinylmethylchlorosilane. The disilazane represented by the general formula (6) includes, for example, hexamethyldisilazane, 1,3-divinyl-1,1,3,3,-tetramethyldisilazane and 1,3-dimethyl-1,1,3,3-tetravinyldisilazane. These triorgana halosilanes and hexaorgano disilazanes may be used as a combination of two or more.

Preferably the molar ratio of the catalyst to the halosilane to be used is 1 : 1 or more, and more preferably from 1 : 1.2 to 1 : 1.8.

Preferably the molar ratio of the halosilazane to the disilazane to be used is 1 : 1 or more, and more preferably from 1 : 1.2 to 1 : 1.8.

### Step (C) :

Generally after the reaction mixture obtained through the step (B) is filtered to be freed from the formed salt and is distilled to be freed from the solvent, the reaction mixture is stripped in the step (C).

As the stripping technique, for example, thin film distillation and solvent extraction can be mentioned.

Preferably the thin film distillation is carried out at 100°C or over, more preferably 100 to 180°C, under a pressure of 10⁻¹ mmHg or below, and more preferably 10⁻² mmHg or below. At this time, if the organopolysiloxane group has functional groups, such as vinyl groups and silanol groups, it is required to select a temperature at which polymerization will not occur due to these groups. The distillation apparatus used in the thin film distillation is not particularly restricted and any distillation apparatus generally used for separation and purification can be used. For example, a Hi Evaolater Wiped Film Evaporator (manufactured by SAKURA SEISAKUSHO, LTD.) and a Centrifugal Molecular Still (manufactured by NIPPON SHARYO , LTD.) can be mentioned.

As the solvent used for solvent extraction, any solvent can be used so long as that solvent will neither react with nor dissolve the intended straight-chain organopolysiloxane and can dissolve volatile components of low-molecular organopolysiloxanes and cyclic siloxanes. Such a solvent includes, for example, a polar organic solvent, such as acetone.

The above stripping may be repeated twice or more, or different stripping techniques may be used in combination.

The polymer thus obtained through the stripping step is decreased in the amount of cyclic siloxanes having molecular weights of 3,000 or less to 50 ppm or less and is substantially freed from other volatile siloxanes.

### Production method (II)

Out of the straight-chain organopolysiloxanes of the present invention, the straight-chain organopolysiloxanes the both ends of which are terminated by a hydrogen atom can be obtained by (A') subjecting a cyclotrisiloxane represented by the general formula (3) to ring opening polymerization by using as a catalyst a lithium silanolate or a compound represented by the general formula (4) in the presence of water, (B') deactivating the catalyst in the reaction mixture obtained in the step (A'), and (C') stripping the obtained polymer.

### Step (A') :

The step (A') is carried out in the same way as in the step (A) in Method (I), with the exception that water is allowed to be present at the time of the polymerization.

The water may be in such a small amount that the molar ratio of the silicon atoms in the reaction mixture to H₂O is in the range of 20 to 6,000. When the water is added to the reaction system, it is desirable that the water is added after mixed with a hydrophilic organic solvent, such as an ether, e.g., dioxane, glyme, and tetrahydrofuran. As the hydrophilic organic solvent, any hydrophilic organic solvent can be used so long as that hydrophilic organic solvent is readily separable from the straight-chain organopolysiloxane produced in the ring opening polymerization reaction and does not affect adversely the physical properties of that straight-chain organopolysiloxane.

### Step (B') :

In the step (B'), the catalyst in the reaction mixture obtained in the step (A') is deactivated. This deactivation is carried out by neutralization with an acid substance. The acid substance to be used includes, for example, an halogenated alkane, such as tetrachloroethane; an organic acid, such as acetic acid and formic acid; and an inorganic acid, such as sulfuric acid and carbon dioxide. In the case where a phosphonium compound represented by the general formula (4) is used as a catalyst, the deactivation may be carried out by heating to or above the decomposition temperature of that compound, for example, to 200°C or above. The amount of the acid substance to be used is suitably 1 to 10 times the equivalent amount of the catalyst.

### Step (C') :

The step (C') may be carried out in the same way as the step (C).

In Methods (I) and (II) described above, in order to make easy the stirring at the time of the polymerization, the neutralization, or the dissolution or dispersion of the neutralizer and to make the salts formed by the neutralization be easily removed by filtering, in any of the steps, an inert solvent may be used suitably. Such an inert solvent includes, for example, a halogenated hydrocarbon solvent, such as flon 113, m-xylene hexafluoride, methylene chloride, and trichloroethane.

According to the present production process, a straight-chain organopolysiloxane substantially free from cyclic siloxanes can be obtained and this is greatly attributed to the structure of the trisiloxane represented by the general formula (3) used as a monomer in the polymerization steps (A) and (A') in Production Methods (I) and (II). Although the reason is not apparent, if the production is carried out in the same way as above by using a hexamethyltrisiloxane as a starting material to carry out, since a methylpolysiloxane containing large amounts of cyclic siloxanes having ten or more repeated units is obtained, the reason is inferred in such a way that, as a result of the introduction of a hydrocarbon group having three or more carbon atoms as a pendant substituent of the trisiloxane that is a raw material in addition to the methyl groups, the reactivities of the three siloxane bonds in the molecule are different.

### Uses

The straight-chain organopolysiloxane of the present invention is useful as a silicone oil used for grease, cosmetics, sealing material, paint, coating material, and the like and as a raw material or an additive for a rubberlike cured product. Since this organopolysiloxane does substantially not contain volatile low-molecular-weight straight-chain siloxanes and cyclic siloxanes at all, low-molecular-weight components neither volitilize nor cause breeding. Therefore where the straight-chain organopolysiloxane is used as an electric/electronic material, a contact trouble will not occur and where the straight-chain organopolysiloxane is used as a building material, the problem of making the surroundings soiled will not occur.

### EXAMPLES

Examples of the present invention are now given below. The present invention is not restricted by the following Examples at all.

### Example 1

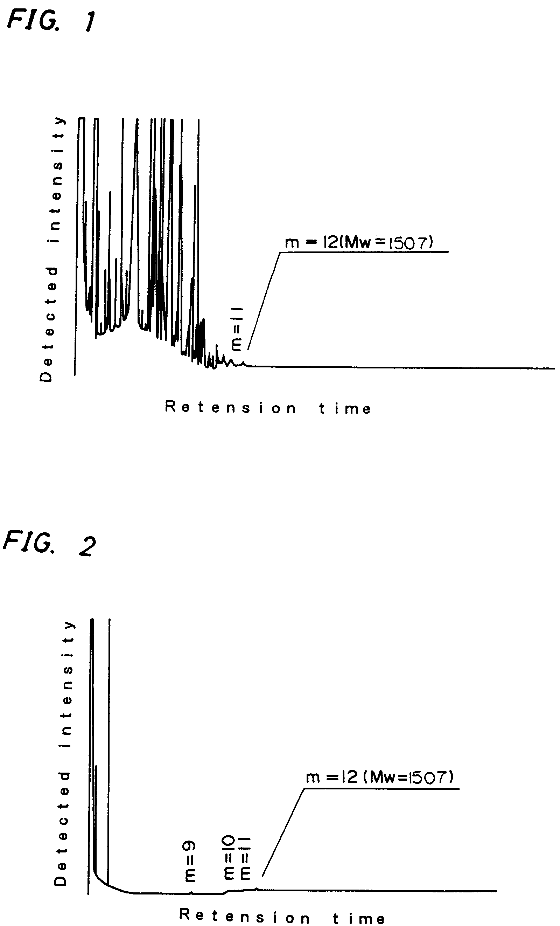

100 g (0.266 mol) of 1-dodecyl-1,2,2,3,3-pentamethylcyclotrisiloxane, 0.14 g of a tetrahydrofuran solution containing 40 % by weight of water (0.003 mol of water), and 0.1 g of tetraglyme were mixed in a 0.2-liter four-necked flask with a stirrer, a thermometer, and a reflux condenser and the obtained mixture was heated to 90°C with stirring. Then 2.176 g of a tetrahydrofuran solution containing 5 % by weight of a lithium silanolate represented by the following formula : 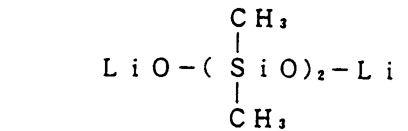
(2.66 x 10⁻³ mol of the lithium silanolate) was added to the mixture and the polymerization reaction was carried out at 90°C for 5 hours with stirring. The reaction liquid after the stirring for 5 hours was cooled to 80°C, and 6.0 g of tetrachloroethane was added over 3 hours to neutralize the catalyst. The reaction liquid after the neutralization was filtered to separate the salt formed by the neutralization and the resulting filtrate was distilled under reduced pressure to remove the tetrahydrofuran to obtain a roughly refined product of a polymer. By subjecting the obtained roughly refined product to gas chromatography, a chart shown in Fig. 1 was obtained. With a 1.00-g sample of the thus obtained roughly refined product, 10.00 g of an acetone solution containing 20 ppm of n-decane (used as an internal standard substance) was mixed, the obtained mixed liquid was shaken and then allowed to stand for 24 hours to obtain an acetone layer, and the sample was removed from the acetone layer and was subjected to gas chromatography. In the gas chromatography, a G.C. 14A manufactured by Shimazu Seishakusho Ltd. (detection method : flame ion detection method) and a Capillary Column TC-1701 (0.53 mm x 30 m) manufactured by GL were used. The column temperature conditions were as follows in the shown order :
(1) retention at 70°C for 1 min,
(2) temperature rise from 70°C to 270°C at 15°C/min, and
(3) retention at 270°C for 40 min.

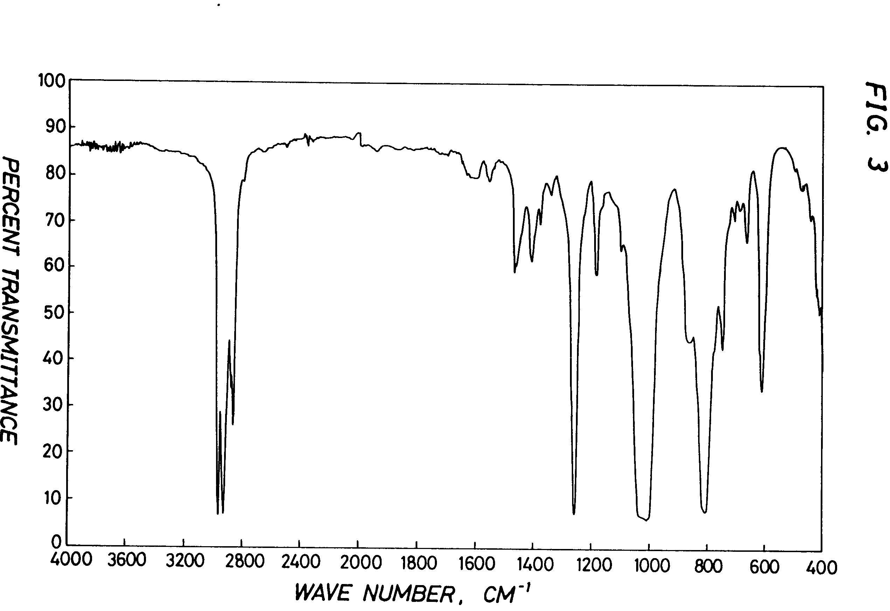

Further, the roughly refined product was subjected to solvent extraction with acetone. The polymer separated from the acetone layer was taken out and was subjected to thin film distillation at 150°C and 1 x 10⁻³ mmHg by using a thin film distillation apparatus (Hi Evaolater Wiped Film Evaporator manufactured by SAKURA SEISAKUSHO, LTD.) to obtain the polymer [colorless; viscosity (25°C) : 986 cSt; refractive index : 1.434; and specific gravity : 0.92]. The thus obtained polymer was subjected to gas chromatography in the same way as above, thereby obtaining a chart shown in Fig. 2. From said chart, the quantity of cyclic polysiloxanes having molecular weights of 3,000 or less contained in the obtained polymer was determined to be 5 ppm. The quantity of said cyclic siloxanes was determined from the ratio of the value of the area of the peak of the n-decane added as an internal standard to the sample to the total of the values of the areas of the peaks detected during the retention period between 3 min and 35 min.

Further, with respect to the polymer obtained above, the results of the analysis of the content of the terminal silanol groups, the infrared absorption spectrum, and the ¹H-NMR spectrum were as given below.

From the results, the polymer obtained above was identified to be a straight-chain organopolysiloxane represented by the following formula :

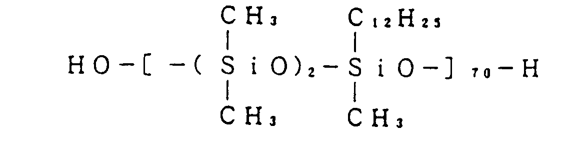

### The content of terminal silanol groups

0.0076 mol/100 g

### Infrared absorption spectrum

The infrared absorption spectrum is shown in Fig. 3.
990 to 1,130 cm⁻¹ (Si-O-Si)
800 cm⁻¹, 1,260 cm⁻¹, and 2,970 cm⁻¹ (Si-CH₃)

### ¹H-NMR spectrum (Solvent : carbon tetrachloride; internal standard : chloroform) δ value (ppm) 0.13 to 0.50 (m, Si-CH₃, 15H) 1.00 to 1.17 (m, C-CH₃, 3H) 0.80 to 1.27 (m, CH₂, 22H)

### Example 2

1,000 g (3.42 mol) of 1-hexyl-1,2,2,3,3-pentamethylcyclotrisiloxane, 1.75 g of a tetrahydrofuran solution containing 40 % by weight of water (0.04 mol of water), and 1.0 g of tetraglyme were mixed in a 2-liter four-necked flask with a stirrer, a thermometer, and a reflux condenser and the obtained mixture was heated to 90°C with stirring. Then 28.0 g of a tetrahydrofuran solution containing 5 % by weight of the same lithium silanolate as used in Example 1 (3.42 x 10⁻² mol of the lithium silanolate) was added to the mixture and the polymerization reaction was carried out at 90°C for 5 hours with stirring. The reaction liquid after the stirring for 5 hours was cooled to 80°C, and 60 g of tetrachloroethane was added over 3 hours to neutralize the catalyst. The reaction liquid after the neutralization was filtered to separate the salt formed by the neutralization and the resulting filtrate was distilled under reduced pressure to remove the tetrahydrofuran to obtain a roughly refined product of a polymer.

In the same way as described in Example 1, the above roughly refined product of a polymer was subjected to extraction with acetone and then to thin film distillation to obtain the polymer [colorless; viscosity (25°C) : 1,273 cSt; refractive index : 1.422; and specific gravity : 0.95].

Further, with respect to the polymer obtained above, the results of the analysis of the content of the terminal silanol groups, the infrared absorption spectrum, and the ¹H-NMR spectrum were as given below.

From the results, the polymer obtained above was identified to be a straight-chain organopolysiloxane represented by the following formula :

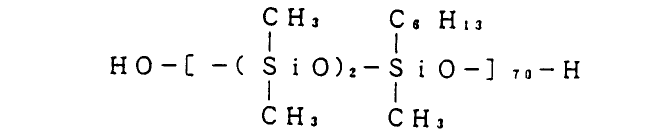

### The content of terminal silanol groups

0.0098 mol/100 g

### Infrared absorption spectrum

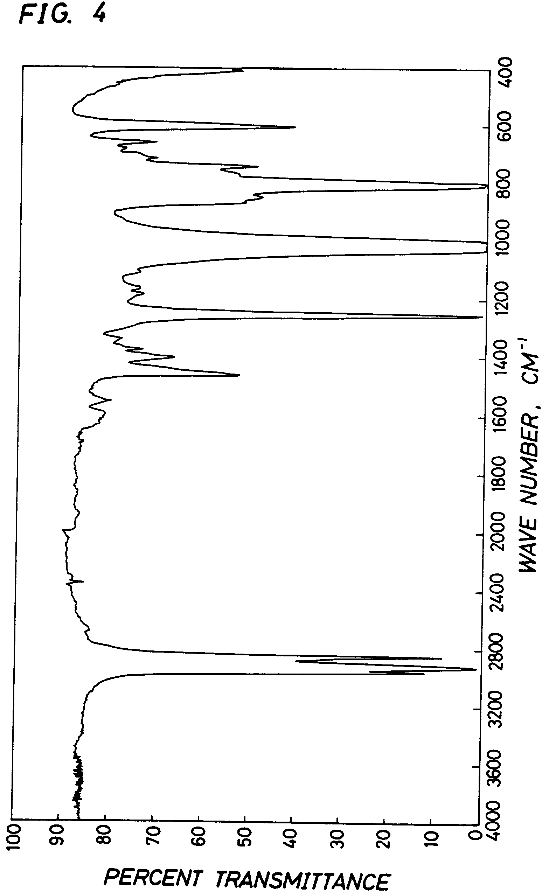

The infrared absorption spectrum is shown in Fig. 4.
990 to 1,130 cm⁻¹ (Si-O-Si)
800 cm⁻¹, 1,260 cm⁻¹, and 2,970 cm⁻¹ (Si-CH₃)

### ¹H-NMR spectrum (Solvent : carbon tetrachloride; internal standard : chloroform) δ value (ppm) 0.13 to 0.50 (m, Si-CH₃, 15H) 1.00 to 1.17 (m, C-CH₃, 3H) 0.80 to 1.27 (m, CH₂, 10H)

The content of cyclic siloxanes having molecular weights of 3,000 or less contained in this polyorganosiloxane was determined to be 5 ppm.

### Example 3

100 g (0.344 mol) of 1-cyclohexyl-1,2,2,3,3-pentamethylcyclotrisiloxane and 0.1 g of tetraglyme were mixed in a 0.2-liter four-necked flask with a stirrer, a thermometer, and a reflux condenser and the obtained mixture was heated to 90°C with stirring. Then 2.814 g of a tetrahydrofuran solution containing 5 % by weight of the same lithium silanolate as used in Example 1 (3.44 x 10⁻³ mol of the lithium silanolate) was added to the mixture, the reaction liquid was cooled to 50°C, and 0.416 g (3.44 x 10⁻³ mol) of vinyldimethyl chloride and 0.955 g (5.16 x 10⁻³ mol) of 1,2-divinyl-1,1,2,2-tetremethyldisilazane were added, followed by stirring for 2 hours to neutralize the catalyst. Then the reaction liquid was filtered to separate the salts formed by the neutralization and the resulting filtrate was distilled under reduced pressure to remove the tetrahydrofuran to obtain a roughly refined product of a polymer.

In the same way as described in Example 1, the above roughly refined product of a polymer was subjected to extraction with acetone and then to thin film distillation to obtain the polymer [colorless; viscosity (25°C) : 2,150 cSt; refractive index : 1.443; and specific gravity : 1.01].

Further, with respect to the polymer obtained above, the results of the analysis of the content of the terminal silanol groups, the infrared absorption spectrum, and the ¹H-NMR spectrum were as given below.

From the results, the polymer obtained above was identified to be a straight-chain organopolysiloxane represented by the following formula :

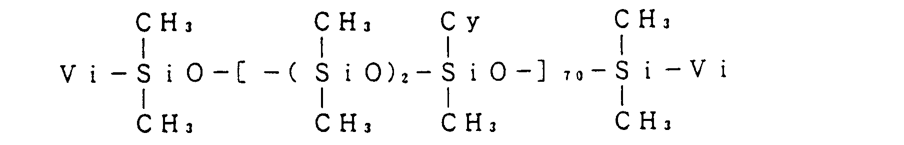

### The content of terminal silanol groups

0.0098 mol/100 g

### Infrared absorption spectrum

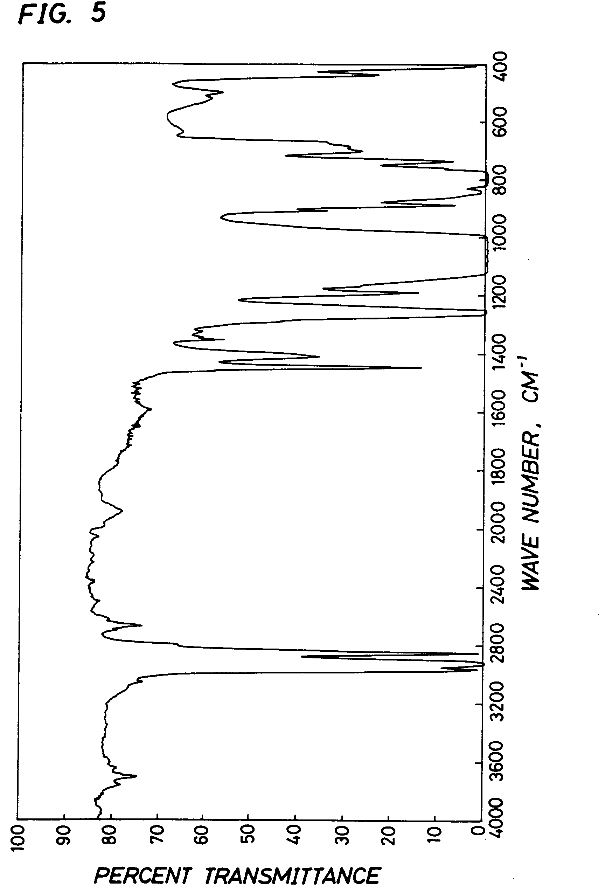

The infrared absorption spectrum is shown in Fig. 5.
990 to 1,130 cm⁻¹ (Si-O-Si)
800 cm⁻¹, 1,260 cm⁻¹, and 2,970 cm⁻¹ (Si-CH₃)

### ¹H-NMR spectrum (Solvent : carbon tetrachloride; internal standard : chloroform) δ value (ppm) 0.27 to 0.73 (m, Si-CH₃, 15H) 1.20 to 1.40 (m, -CH₂-, 10H; m, -CH-, 1H)

The content of cyclic siloxanes having molecular weights of 3,000 or less contained in this polyorganosiloxane was determined to be 3 ppm.

### Example 4

100 g (0.404 mol) of 1-allyl-1,2,2,3,3-pentamethylcyclotrisiloxane and 0.1 g of tetraglyme were mixed in a 0.2-liter four-necked flask with a stirrer, a thermometer, and a reflux condenser and the obtained mixture was heated to 90°C with stirring. Then 3.305 g of a tetrahydrofuran solution containing 5 % by weight of the same lithium silanolate as used in Example 1 (4.04 x 10⁻³ mol of the lithium silanolate) was added to the mixture, the reaction liquid was cooled to 50°C, and 0.489 g (4.04 x 10⁻³ mol) of vinyldimethyl chloride and 1.121 g (6.06 x 10⁻³ mol) of 1,2-divinyl-1,1,2,2-tetremethyldisilazane were added, followed by stirring for 2 hours to neutralize the catalyst. Then the reaction liquid was filtered to separate the salts formed by the neutralization and the resulting filtrate was distilled under reduced pressure to remove the tetrahydrofuran to obtain a roughly refined product of a polymer.

In the same way as described in Example 1, the above roughly refined product of a polymer was subjected to extraction with acetone and then to thin film distillation to obtain the polymer [colorless; viscosity (25°C) : 4,865 cSt; refractive index : 1.423; and specific gravity : 0.99].

Further, with respect to the polymer obtained above, the results of the analysis of the content of the terminal silanol groups, the infrared absorption spectrum, and the ¹H-NMR spectrum were as given below.

From the results, the polymer obtained above was identified to be a straight-chain organopolysiloxane represented by the following formula :

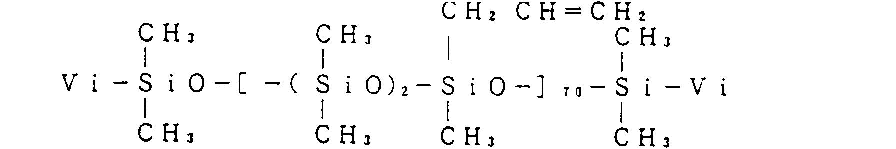

### The content of terminal silanol groups

0.0114 mol/100 g

### Infrared absorption spectrum

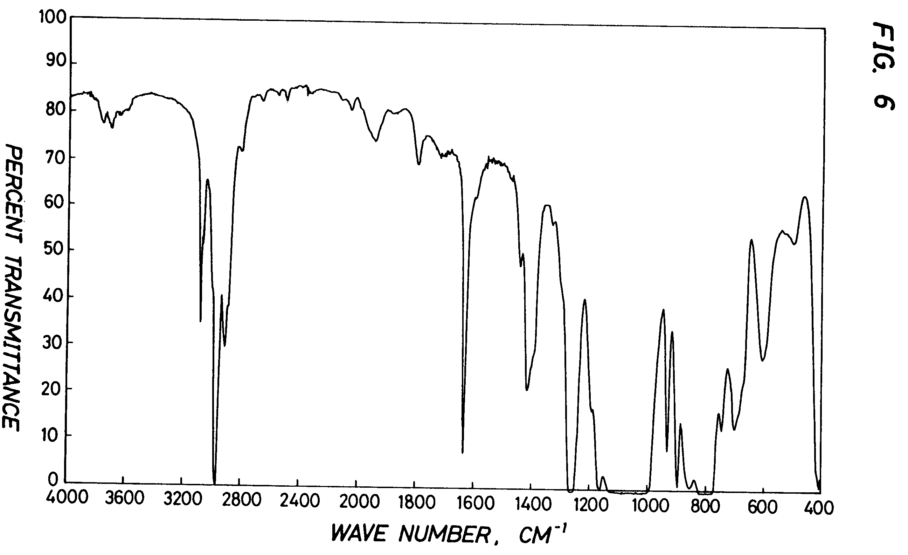

The infrared absorption spectrum is shown in Fig. 6.
990 to 1,130 cm⁻¹ (Si-O-Si)
800 cm⁻¹, 1,260 cm⁻¹, and 2,970 cm⁻¹ (Si-CH₃)

### ¹H-NMR spectrum (Solvent : carbon tetrachloride; internal standard : chloroform) δ value (ppm) 0.27 to 0.73 (m, Si-CH₃, 15H) 1.20 to 2.00 (m, -CH₂-, 2H) 4.80 to 5.20 (m, =CH₂-, 2H) 5.60 to 6.20 (m, -CH=, 1H)

The content of cyclic siloxanes having molecular weights of 3,000 or less contained in this polyorganosiloxane was determined to be 5 ppm.

### Comparative Example 1

Example 1 was repeated to obtain a roughly refined product of a polymer, except that, in place of the 1-dodecyl-1,2,2,3,3-pentamethylcyclotrisiloxane, 1,1,2,2,3,3-hexamethylcyclotrisiloxane was used, and in the same way as described in Example 1 the obtained roughly refined product was subjected to extraction with acetone and then to thin film distillation to obtain a refined polymer, a dimethylpolysiloxane.

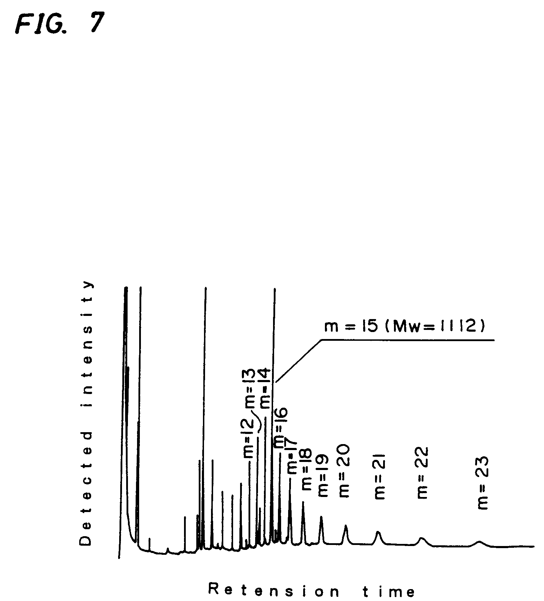

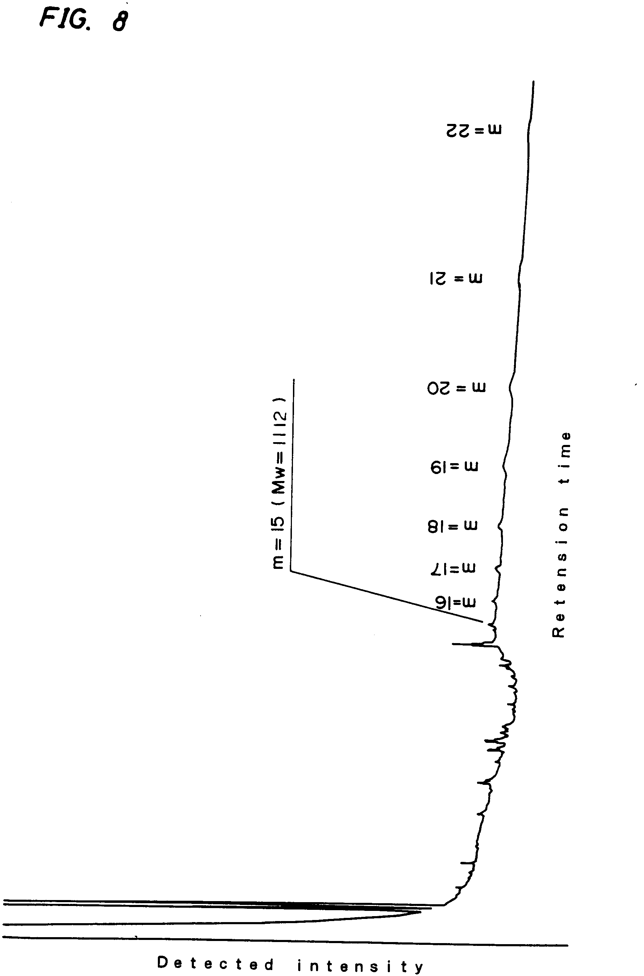

The above roughly refined product and the above refined polymer was subjected to gas chromatography and the obtained charts are shown in Figs. 7 and 8.

Further, in the same way as described in Example 1, it was determined that the content of cyclic siloxanes having molecular weights of 3,000 or less in the above refined polymer was 180 ppm.

## Claims

1. A straight-chain organopolysiloxane represented by the following general formula (1) : 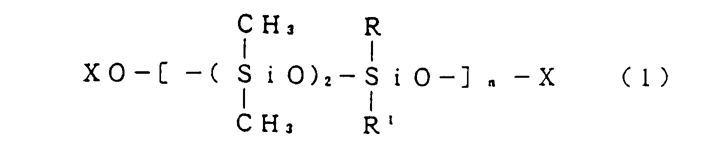 wherein R represents an unsubstituted or substituted monovalent hydrocarbon group having 3 or more carbon atoms, R¹ represents a methyl group or an unsubstituted or substituted monovalent hydrocarbon group having 3 or more carbon atoms, X, which are the same or different, each represent a hydrogen atom or a triorganosilyl group represented by the following general formula (2) :
-Si(R²)₃ (2)
wherein R² represents a monovalent hydrocarbon group having 1 to 8 carbon atoms, and n is an integer of 15 to 4,000, and containing cyclic polysiloxanes having molecular weights of 3,000 or less in an amount of 50 ppm or less.

2. The straight-chain organopolysiloxane of Claim 1, wherein, in the general formula (1), R represents a straight-chain alkyl group , a branched alkyl group, a cyclic alkyl group, an aryl group, an alkenyl group or an aralkyl group, which each has 3 or more carbon atoms, or one of corresponding substituted hydrocarbon groups that are formed by replacing part or all of the hydrogen atoms of the above hydrocarbon groups by a halogen atom(s) and R¹ represents a methyl group or a straight-chain alkyl group, a branched alkyl group, a cyclic alkyl group, an aryl group, an alkenyl group or an aralkyl group, which each has 3 or more corbon atoms, or one of corresponding substituted hydrocarbon groups that are formed by replacing part or all of the hydrogen atoms of the above hydrocarbon groups by a halogen atom(s).

3. The straight-chain organopolysiloxane of Claim 1, wherein, in the general formula (1), R represents a propyl group, a butyl group, a hexyl group, an octyl group, a decyl group, a dodecyl group, an isopropyl group, an isobutyl, an isooctyl group, a 2-ethylhexyl group, a cyclohexyl group, a phenyl group, a tolyl group, an allyl group, a crotyl group, a hexenyl group, or one of corresponding substituted hydrocarbon groups that are formed by replacing part or all of the hydrogen atoms of the above hydrocarbon groups by a halogen atom, and R¹ represents a methyl group, a propyl group, a butyl group, a hexyl group, an octyl group, a decyl group, a dodecyl group, an isopropyl group, an isobutyl, an isooctyl group, a 2-ethylhexyl group, a cyclohexyl group, a phenyl group, a tolyl group, a vinyl group, an allyl group, a crotyl group, a hexenyl group, or one of corresponding substituted hydrocarbon groups that are formed by replacing part or all of the hydrogen atoms of the above hydrocarbon groups by a halogen atom.

4. A process of producing a straight-chain organopolysiloxane represented by said general formula (1) wherein X is a triorganosilyl group represented by said general formula (2) and containing cyclic polysiloxanes having molecular weights of 3,000 or less in an amount of 50 ppm or less, said process comprising the following steps of :
(A) subjecting a cyclotrisiloxane represented by the general formula (3) : 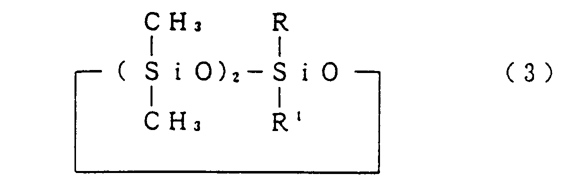 wherein R and R¹ have the same meaning as defined above, to ring opening polymerization in the presence of a lithium silanolate or a compound represented by the general formula (4) : 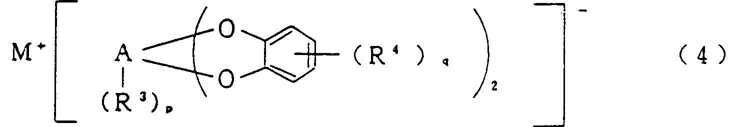 wherein R³ and R⁴ each represent a monovalent organic group, M represents a quaternary ammonium ion (including a pyridinium ion), a quaternary phosphonium ion, or an alkali metal ion, A represents a silicon atom or a boron atom, p is 1 where A is a silicon atom or p is 0 where A is a boron atom, and q is an integer of 0 to 2,
(B) neutralizing the reaction mixture obtained in the step (A) with a halosilane represented by the general formula (5) :
Y-Si(R²)₃ (5)
wherein Y represents a halogen atom and R² has the same meaning as defined above and a disilazane represented by the general formula (6) :
NH[Si(R²)₃]₂ (6)
wherein R² has the same meaning as defined above, and
(C) stripping the polymer obtained in the step (B).

5. The process of Claim 4, wherein the amount of the lithium silanolate is such that the molar ratio of the total of the silicon atoms in the cyclotrisiloxane of the general formula (3) to the total of the molecules of the lithium silanolate is in the range of from 100 : 1 to 10,000 : 1.

6. The process of Claim 4, wherein the amount of the compound represented by the general formula (4) is 0.01 to 0.05 % by weight based on the cyclotrisiloxane of the general formula (3).

7. The process of Claim 4, wherein said halosilane is trimethylchlorosilane, vinyldimethylchlorosilane or divinylmethylchlorosilane and said dislazane is hexamethyldisilazane, 1,3-divinyl-1,1,3,3-tetramethyldisilazane or 1,3-dimethyl-1,1,3,3-tetravinyldisilazane.

8. The process of Claim 4, wherein the molar ratio of the lithium silanolate or the compound of the general formula (4) to said halosilane is 1 : 1 or more.

9. The process of Claim 4, wherein the molar ratio of said halosilane to said silazane is 1 : 1 or more.

10. The process of Claim 4, wherein said stripping is carried out by thin film distillation or solvent extraction.

11. A process of producing a straight-chain organopolysiloxane represented by said general formula (1) wherein X is a hydrogen atom, and containing cyclic polysiloxanes having molecular weights of 3,000 or less in an amount of 50 ppm or less, said process comprising the following steps of :
(A') subjecting a cyclotrisiloxane represented by the general formula (3) : 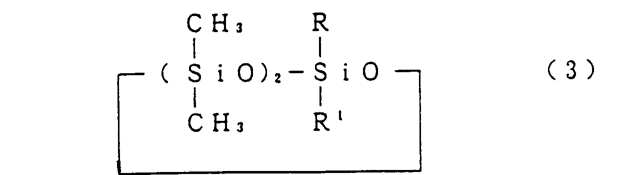 wherein R and R¹ have the same meaning as defined above, to ring opening polymerization in the presence of as a catalyst a lithium silanolate or a compound represented by the general formula (4) : 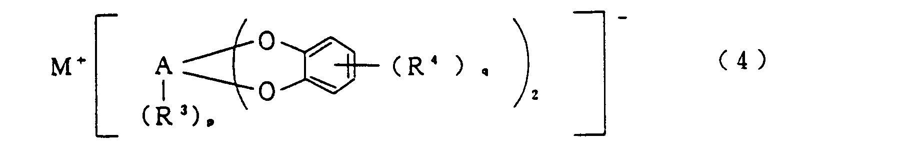 wherein R³ and R⁴ each represent a monovalent organic group, M represents a quaternary ammonium ion (including a pyridinium ion), a quaternary phosphonium ion, or an alkali metal ion, A represents a silicon atom or a boron atom, p is 1 where A is a silicon atom or p is 0 where A is a boron atom, and q is an integer of 0 to 2, and water,
(B') inactivating the catalyst in the reaction mixture obtained in the step (A'), and
(C') stripping the polymer obtained in the step (B').

12. The process of Claim 11, wherein the amount of the lithium silanolate is such that the molar ratio of the total of the silicon atoms in the cyclotrisiloxane of the general formula (3) to the total of the molecules of the lithium silanolate is in the range of from 100 : 1 to 10,000 : 1.

13. The process of Claim 11, wherein the amount of the compound represented by the general formula (4) accounts for 0.01 to 0.05 % by weight based on the cyclotrisiloxane of the general formula (3).

14. The process of Claim 11, wherein the amount of the water is such that the molar ratio of the silicon atoms in the reaction mixture to the H₂O is in the range of 20 to 6,000.

15. The process of Claim 11, wherein the deactivation of the catalyst in said step (B') is carried out by neutralization using an acid substance.

16. The process of Claim 11, wherein, in said step (A') as a catalyst, a phosphonium compound of the general formula (4) is used and, in said step (B') the deactivation of the catalyst is carried out by heating at or above the decomposition temperature of said compound.

17. The process of Claim 11, wherein said stripping is carried out by thin film distillation or solvent extraction.
